**Europäisches Patentamt**

**European Patent Office**

**Office européen des brevets**

(19)

(11) Numéro de publication : **0 350 350 B1**

(12)

# FASCICULE DE BREVET EUROPEEN

(45) Date de publication du fascicule du brevet :
**15.04.92 Bulletin 92/16**

(51) Int. Cl.$^5$ : **B60T 13/52**

(21) Numéro de dépôt : **89401657.5**

(22) Date de dépôt : **14.06.89**

(54) **Système de montage d'un servomoteur d'assistance.**

(30) Priorité : **27.06.88 FR 8808585**

(43) Date de publication de la demande :
**10.01.90 Bulletin 90/02**

(45) Mention de la délivrance du brevet :
**15.04.92 Bulletin 92/16**

(84) Etats contractants désignés :
**DE ES FR GB IT**

(56) Documents cités :
**EP-A- 0 118 118**
**DE-B- 1 163 163**
**FR-A- 2 216 154**
**US-A- 4 658 660**

(73) Titulaire : **BENDIX EUROPE Services Techniques S.A.**
**126 rue de Stalingrad**
**F-93700 Drancy (FR)**

(72) Inventeur : **Gautier, Jean-Pierre**
**BENDIX FRANCE 126 rue de Stalingrad**
**F-93700 Drancy (FR)**

EP 0 350 350 B1

**Description**

L'invention concerne un système permettant de monter un servomoteur d'assistance tel qu'un servomoteur d'assistance au freinage sur une console support prévue à cet effet dans le compartiment moteur d'un véhicule automobile.

Lors de la fabrication à la chaîne des véhicules automobiles, la facilité de montage de chacun des organes constituant ce véhicule constitue un élément important puisqu'un gain de temps relativement modeste dans le montage de certains de ces éléments peut avoir pour conséquence, en sortie de chaîne, une augmentation appréciable de la cadence.

Cette facilité de montage est aussi appréciable lorsque certains organes doivent être remplacés au cours de la vie du véhicule.

Dans cet esprit, on a déjà cherché par le passé à faciliter le montage du servomoteur d'assistance au freinage. Ainsi, le document US-A-4 658 660 propose une technique de montage originale selon laquelle le servomoteur est d'abord accroché à une plaque support par l'intermédiaire d'une articulation du type charnière située sur la face avant du servomoteur et à la partie supérieure de celui-ci. En faisant pivoter le servomoteur autour de cette articulation, on amène des trous formés dans une languette formée à la partie inférieure du servomoteur en face de trous taraudés correspondants formés dans la plaque support. Des vis sont ensuite mises en place dans les trous en vis-à-vis, afin de solidariser le servomoteur de la plaque support.

Cette technique de montage procure un gain de temps par rapport aux techniques plus traditionnelles. Cependant, elle n'est pas dépourvue d'inconvénients. En particulier, la mise en place des vis après que l'on ait fait pivoter le servomoteur autour de son articulation conduit encore à une perte de temps qu'il est souhaitable d'éviter. Par ailleurs, l'emplacement de l'articulation nécessite, pour faire pivoter le servomoteur afin d'amener les trous en vis-à-vis les uns des autres, une action de traction sur la tige d'actionnement du servomoteur. Cette action de traction est opposée à l'action de poussée exercée normalement sur cette tige à partir de la pédale de frein et, par conséquent, malaisée à mettre en oeuvre.

La présente invention a précisément pour objet un système de montage d'un servomoteur d'assistance sur une console support qui permet encore un gain de temps par rapport au système décrit dans le document US-A-4 658 660, grâce notamment à la suppression de la dernière étape nécessaire à la mise en oeuvre de ce dernier système et à une disposition plus judicieuse de l'articulation.

L'invention concerne donc un système de montage d'un servomoteur d'assistance sur une console support comprenant des organes d'accrochage par lesquels le servomoteur peut reposer par gravité sur la console support, ces organes d'accrochage définissant un axe de pivotement orthogonal à une tige d'actionnement du servomoteur et des faces d'appui disposées du même côté du servomoteur que les organes d'accrochage et aptes à être appliquées l'une contre l'autre sous l'effet d'un pivotement du servomoteur autour dudit axe, l'une étant solidaire du servomoteur et l'autre de la console support.

Selon l'invention, les organes d'accrochage ainsi que les faces d'appui sont placés au-dessous de la tige d'actionnement du servomoteur. Lorsque le système de montage comprend des organes de fixation complémentaires qui s'emboitent automatiquement les uns dans les autres lorsqu'on fait pivoter le servomoteur autour de son axe de pivotement, le temps de montage est réduit à la mise en place des organes d'accrochage du servomoteur sur les organes d'accrochage complémentaires de la console support, puis à l'application d'une force de pivotement suffisante pour emboîter les organes de fixation complémentaires. De plus, la disposition relative de l'axe de pivotement et des faces d'appui est choisie de telle sorte que le pivotement du servomoteur assurant la fixation définitive de celui-ci est réalisé en exerçant une force de poussée sur la tige d'actionnement, ce qui simplifie la commande de ce pivotement.

Les organes d'accrochage ainsi que les faces d'appui portant les organes de fixation complémentaires sont placés au-dessous de la tige d'actionnement du servomoteur, de telle manière que les organes de fixation ne travaillent pas à l'arrachage.

Afin que l'effort appliqué que la tige d'actionnement du servomoteur soit juste suffisant pour assurer l'emboîtement des organes de fixation complémentaires mais n'entraîne pas de risque de dégradation, les organes d'accrochage peuvent notamment être placés approximativement à mi-distance entre la tige d'actionnement et les organes de fixation complémentaires.

Dans un mode de réalisation préféré de l'invention, les organes d'accrochage comprennent deux tourillons alignés solidaires d'un boîtier du servomoteur et deux décrochements semi-circulaires formés dans la console support, ouverts vers le haut et dans lesquels sont placés les tourillons.

De préférence, les organes de fixation comprennent au moins une tige solidaire d'un boîtier du servomoteur et un trou en vis-à-vis formé dans la console support et dont le bord est entaillé et replié partiellement en éloignement de la tige.

Un mode de réalisation préféré de l'invention va à présent être décrit, à titre d'exemple nullement limitatif, en se référant aux dessins annexés dans lesquels :

– la figure 1 est une vue de côté, en coupe partielle, représentant de façon schématique un système de montage conforme à l'invention avant qu'un pivotement du servomoteur n'assure la fixation définitive de celui-ci sur sa console support ; et

– la figure 2 est une vue comparable à la figure 1 représentant le système de montage dans sa position finale, c'est-à-dire après l'emboîtement des organes de fixation complémentaires.

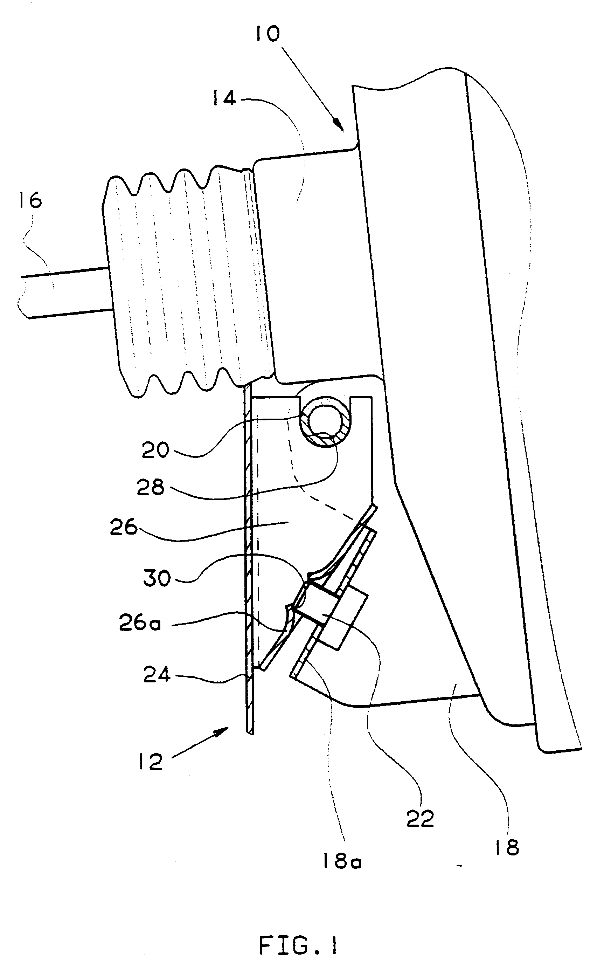

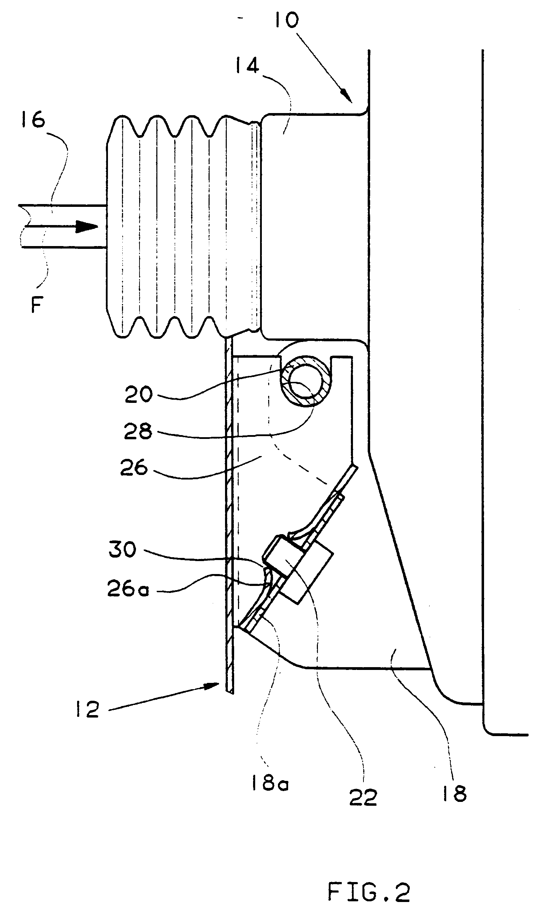

Sur les figures 1 et 2, on a seulement représenté les parties adjacentes d'un servomoteur d'assistance au freinage 10 et d'un support 12 prévu dans le compartiment moteur d'un véhicule pour supporter le servomoteur 10, par l'intermédiaire du système de montage selon l'invention.

La partie du servomoteur d'assistance 10 illustrée sur les figures 1 et 2 correspond à la partie arrière de ce servomoteur, c'est-à-dire à la partie qui est située du côté de la pédale de frein (non représentée). On reconnaît sur les figures le boîtier 14 du servomoteur, ainsi que la tige d'actionnement 16 qui est disposée selon l'axe du servomoteur et par laquelle ce dernier est relié à la pédale de frein (non représentée).

Pour permettre son montage sur le support 12, le servomoteur 10 comporte de plus une plaque 18 fixée par exemple par soudure à l'extérieur du boîtier 14, sur la face arrière de ce dernier. La plaque 18 est orientée radialement par rapport à l'axe du servomoteur et elle est prévue pour être placée dans une position verticale et en dessous de cet axe, comme l'illustrent les figures 1 et 2.

Dans sa partie la plus proche de l'axe du servomoteur, la plaque 18 supporte deux tourillons alignés 20 qui font saillie sur les deux faces opposées de la plaque 18, perpendiculairement à celles-ci. Lorsque la plaque 18 est orientée de la manière définie précédemment, l'axe commun aux deux tourillons 20, dont on verra ultérieurement qu'il constitue un axe de pivotement du servomoteur lors de son montage, est orienté selon une direction horizontale orthogonale à l'axe du servomoteur matérialisé par la tige d'actionnement 16.

Dans sa partie la plus éloignée de l'axe du servomoteur, la plaque 18 comporte une partie 18a repliée à angle droit par rapport au reste de la plaque 18. Cette partie 18a, approximativement plane, fait un angle aigu, par exemple voisin de 50°, avec l'axe de la tige d'actionnement 16 du servomoteur. De plus, la partie 18a de la plaque 18 comporte par exemple en son centre un trou dans lequel est fixée une tige 22 qui fait saillie vers l'arrière à partir de cette partie 18a. La tige 22 peut notamment être fixée dans ce trou par vissage ou par tout autre moyen approprié.

L'agencement relatif des tourillons 20 et de la tige 22 est tel que cette dernière est située approximativement dans le plan radial passant par l'axe des tourillons 20 et perpendiculaire à l'axe du servomoteur 10. De plus, les tourillons 20 sont placés approximativement à mi-distance entre l'axe du servomoteur matérialisé par la tige d'actionnement 16 et la tige 22.

Comme l'illustrent également les figures 1 et 2, le support 12 prévu pour recevoir le servomoteur dans le compartiment moteur du véhicule comprend dans l'exemple représenté une plaque verticale 24 sur la face arrière de laquelle est fixée par tout moyen approprié tel que par soudure une console support 26. Cette console 26 comprend deux parties planes parallèles orientées perpendiculairement à la plaque 24 et dont les bords supérieurs comportent deux décrochements semi-circulaires alignés 28, ouverts vers le haut. Le diamètre de ces décrochements 28 est égal au diamètre extérieur des tourillons 20, de telle sorte que ces derniers peuvent reposer par gravité dans le fond des décrochements 28, comme l'illustre notamment la figure 1.

La console 26 présente également une partie repliée 26a dont l'orientation et la disposition sont telles que, lorsque les tourillons 20 sont reçus dans les décrochements 28, une face d'appui avant de la partie repliée 18a de la plaque 18 peut venir en appui contre une face d'appui arrière de cette partie repliée 26a de la console 26, comme l'illustre la figure 2. Dans ces conditions, l'axe du servomoteur matérialisé par la tige d'actionnement 16 est horizontal.

La partie repliée 26a de la console 26 comporte par exemple dans sa partie centrale un trou 30 dont le diamètre est très inférieur à celui de la tige 22. Le bord de ce trou 30 est entaillé par des fentes radiales et replié partiellement vers l'arrière comme l'illustre la figure 1. En outre, ce trou 30 est axialement aligné avec la tige 22 lorsque les tourillons 20 sont reçus dans les décrochements semi-circulaires 28.

Grâce aux caractéristiques du système de montage selon l'invention qui viennent d'être décrites, le montage du servomoteur 10 sur le support 12 est grandement facilité.

Ainsi, pour effectuer ce montage, il suffit dans un premier temps de placer le servomoteur 10 sur la console support 26 de telle sorte que les tourillons 20 reposent par gravité dans les tourillons semi-circulaires 28 (figure 1). On définit ainsi entre le servomoteur et la console support un axe de pivotement qui est situé en dessous de la tige d'actionnement 16 du servomoteur.

Il suffit alors à un opérateur d'exercer sur la pédale (non représentée) placée à l'extrémité de la tige d'actionnement 16 une force de poussée F (figure 2) pour faire pivoter le servomoteur autour de cet axe de pivotement dans le sens correspondant à l'emboîtement de la tige 22 dans le trou 30. En exerçant sur la pédale de frein une force F suffisante pour emmancher à force la tige 22 dans le trou 30, on réalise ainsi la fixation définitive et irréversible du servomoteur 10 sur le support 12.

Comme on a déjà eu l'occasion de le mentionner, le système de montage selon l'invention permet donc de réduire considérablement le temps de montage du servomoteur et de simplifier ce montage.

On comprendra aisément que l'invention n'est pas limitée à la réalisation précise qui vient d'être décrite, mais en couvre toutes les variantes.

En particulier, l'ensemble constitué par les deux tourillons 20 et les décrochements semi-circulaires 28 peut être remplacé par tout ensemble équivalent formé d'organes d'accrochage permettant au servomoteur de reposer par gravité sur la console support tout en constituant un axe de pivotement pour le servomoteur.

De façon comparable, l'ensemble constitué par la tige 22 et par le trou 30 peut comprendre plusieurs tiges et plusieurs trous. Cet ensemble peut aussi être supprimé ou remplacé par tout ensemble équivalent constitué d'organes de fixation quelconques, de préférence aptes à s'emboîter les uns dans les autres de façon irréversible.

Enfin, même si la disposition du système de montage à la partie inférieure du servomoteur est plus facile à mettre en oeuvre, les organes d'accrochage, les faces d'appui et les organes de fixation pourraient être situés différemment par rapport à l'axe du servomoteur, sans sortir du cadre de l'invention.

## Revendications

1. Système de montage d'un servomoteur d'assistance (10) sur une console support (26) comprenant des organes d'accrochage (20, 28) par lesquels le servomoteur peut reposer par gravité sur la console support (26), ces organes d'accrochage définissant un axe de pivotement orthogonal à une tige d'actionnement (16) du servomoteur et des faces d'appui disposées du même côté du servomoteur que les organes d'accrochage et aptes à être appliquées l'une contre l'autre sous l'effet d'un pivotement du servomoteur autour dudit axe, l'une étant solidaire du servomoteur (10) et l'autre de la console support (26) caractérisé par le fait que les dits organes d'accrochage (20, 28) ainsi que les faces d'appui sont placés au-dessous de la tige d'actionnement (16) du servomoteur.

2. Système de montage selon la revendication 1, caractérisé par le fait que les organes d'accrochage (20, 28) sont placés approximativement à mi-distance entre la tige d'actionnement (16) et les faces d'appui.

3. Système de montage selon la revendication 1, caractérisé par le fait qu'il comprend de plus au moins un organe de fixation (22, 30) apte à maintenir les faces d'appui l'une contre l'autre.

4. Système de montage selon la revendication 3, caractérisé par le fait que les organes de fixation (22, 30) s'emboîtent l'un dans l'autre de façon irréversible.

5. Système de montage selon la revendication 4, caractérisé par le fait que les organes de fixation comprennent au moins une tige (22) supportée par une plaque (18) solidaire d'un boîtier (14) du servomoteur et sur laquelle est formée l'une des faces d'appui, et un trou (30) en vis-à-vis formé dans une plaque de la console support (26) sur laquelle est formée l'autre face d'appui, le bord de ce trou (30) étant entaillé et replié partiellement en éloignement de la tige.

6. Système de montage selon l'une quelconque des revendications précédentes, caractérisé par le fait que les organes d'accrochage comprennent deux tourillons alignés (20) solidaires d'un boîtier (14) du servomoteur et deux décrochements semi-circulaires (28) formés dans la console support (26), ouverts vers le haut et dans lesquels sont placés les tourillons.

## Patentansprüche

1. System zur Anbringung eines Hilfservomotors (10) an einer Haltekonsole (26), mit Verhakungselementen (20, 28), durch die der Servomotor durch die Schwerkraft an der Haltekonsole (26) unterstützt werden kann, wobei diese Verhakungselemente eine Schwenkachse, die zu einer Betätigungsstange (16) des Servomotors senkrecht orientiert ist, und Abstützflächen definieren, die auf derselben Seite des Servomotors wie die Verhakungselemente angeordnet und dazu geeignet sind, unter der Wirkung einer Schwenkung des Servomotors um die Achse gegeneinander gedrückt zu werden, wobei eines von ihnen mit dem Servomotor (10) und das andere mit der Haltekonsole (26) verbunden ist, dadurch gekennzeichnet, daß die Verhakungselemente (20, 28) sowie die Abstützflächen unterhalb der Betätigungsstange (16) des Servomotors angeordnet sind.

2. Anbringungssystem gemäß Anspruch 1, dadurch gekennzeichnet, daß die Verhakungselemente (20, 28) im wesentlichen in halbem Abstand zwischen der Betätigungsstange (16) und den Abstützflächen angeordnet sind.

3. Anbringungssystem gemäß Anspruch 1, dadurch gekennzeichnet, daß es außerdem wenigstens ein Befestigungselement (22, 30) umfaßt, das dazu geeignet ist, die Abstützflächen gegeneinander zu halten.

4. Anbringungssystem gemäß Anspruch 3, dadurch gekennzeichnet, daß die Befestigungselemente (22, 30) auf irreversible Weise ineinandergesteckt werden.

5. Anbringungssystem gemäß Anspruch 4, dadurch gekennzeichnet, daß die Befestigungselemente wenigstens eine Stange (22), die von einer mit einem Behälter (14) des Servomotors verbundenen Platte gehalten wird, auf der eine der zwei Abstützflächen gebildet ist, und ein gegenüber ausgebildetes Loch (30) in einer Platte der Haltekonsole (26) umfassen, auf der die andere Abstützfläche ausgebildet ist, wobei der Rand dieses Lochs (30) geschlitzt und teilweise von der Stange weggebogen ist.

6. Anbringungssystem gemäß einem der vorangehenden Ansprüche, dadurch gekennzeichnet, daß die Verhakungselemente zwei mit einem Behälter (14) des Servomotors verbundene, ausgerichtete Drehzapfen und zwei halbkreiaförmige Auffänger (28) umfassen, die in der Haltekonsole (26) ausgebildet und nach oben geöffnet sind und in denen die Drehzapfen angeordnet sind.

## Claims

1. System for mounting a booster (10) on a supporting bracket (26) comprising catching members (20, 28), by means of which the booster can rest on the supporting bracket (26) as a result of gravity, these catching members defining a pivoting axis orthogonal to an actuating rod (16) of the booster and bearing faces arranged on the same side of the booster as the catching members and capable of being laid against one another under the effect of a pivoting of the booster about said axis, one being integral with the booster (10) and the other with the supporting bracket (26), characterized in that said catching members (20, 28) and the bearing faces are located underneath the actuating rod (16) of the booster.

2. Mounting system according to Claim 1, characterized in that the catching members (20, 28) are located approximately half-way between the actuating rod (16) and the bearing faces.

3. Mounting system according to Claim 1, characterized in that it also possesses at least one fastening member (22, 30) capable of keeping the bearing faces against one another.

4. Mounting system according to Claim 3, characterized in that the fastening members (22, 30) fit one into the other irreversibly.

5. Mounting system according to Claim 4, characterized in that the fastening members comprise at least one rod (22) supported by a plate (18) which is fixed to a housing (14) of the booster and on which one of the bearing faces is formed, and an opposite hole (30) made in a plate of the supporting bracket (26), on which the other bearing face is formed, the edge of this hole (30) being notched and partially bent away from the rod.

6. Mounting system according to any one of the preceding claims, characterized in that the catching members comprise two aligned journals (20) fixed to a housing (14) of the booster and two semicircular recesses (28) which are formed in the supporting bracket (26) and are open upwards and in which the journals are placed.

FIG.1

FIG.2